(19) Europäisches Patentamt
European Patent Office
Office européen des brevets

(11) **EP 4 230 408 A1**

(12) **EUROPEAN PATENT APPLICATION**

(43) Date of publication:
**23.08.2023  Bulletin 2023/34**

(21) Application number: **23156597.9**

(22) Date of filing: **14.02.2023**

(51) International Patent Classification (IPC):
**B32B 27/12** (2006.01)      **B32B 5/02** (2006.01)
**B32B 5/18** (2006.01)       **B32B 7/027** (2019.01)
**B32B 7/12** (2006.01)       **B32B 27/06** (2006.01)
**B32B 27/18** (2006.01)      **B32B 27/36** (2006.01)

(52) Cooperative Patent Classification (CPC):
**B32B 5/022; B32B 5/024; B32B 5/028; B32B 5/18;
B32B 5/245; B32B 7/027; B32B 7/12;
B32B 15/046; B32B 15/20; B32B 27/065;
B32B 27/12; B32B 27/18; B32B 27/36;**
B32B 2250/02; B32B 2250/03;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022  IT 202200003056**

(71) Applicant: **Silcart S.p.A.
31030 Carbonera, Frazione Mignagola TV (IT)**

(72) Inventor: **FAOTTO, Ugo
31030 Carbonera, TV (IT)**

(74) Representative: **Pennacchio, Salvatore Giovanni
et al
Jacobacci & Partners S.p.A.
Via Senato, 8
20121 Milano (IT)**

(54) **BACKING LAYER OF AN INSULATING PANEL FOR BUILDING CONSTRUCTIONS AND INSULATING PANEL**

(57)    The invention relates to a backing layer (10, 10a, 10b) for a multi-layer insulating panel (100; 100A; 100B; 100C) for building constructions. Such a backing layer consists of:
- a plastic gas-barrier (gas-tight) film (1) comprising a first film surface (F1) and an opposing second film surface (F2);
- a reinforcing layer (2) made of fibrous material comprising a first reinforcing surface (A1) and an opposing second reinforcing surface (A2).

The fibrous reinforcing layer is applied to said first film surface of the plastic gas-barrier film by means of the first reinforcing surface.

The backing layer is characterized in that the plastic gas-barrier film and the fibrous reinforcing layer comprise polyester.

FIG. 1

EP 4 230 408 A1

(52) Cooperative Patent Classification (CPC): (Cont.)
B32B 2250/04; B32B 2250/05; B32B 2250/40;
B32B 2262/0253; B32B 2262/0276;
B32B 2262/0284; B32B 2262/101;
B32B 2264/104; B32B 2266/0278;
B32B 2307/304; B32B 2307/306;
B32B 2307/3065; B32B 2307/718;
B32B 2307/7242; B32B 2307/7265;
B32B 2307/732; B32B 2419/00; B32B 2607/00

**Description**

TECHNOLOGICAL BACKGROUND OF THE INVENTION

Field of application

The present invention relates to a backing layer of a multi-layer insulating panel for building constructions. In particular, the invention relates to a gas-tight backing layer for an insulating panel of the type comprising a thermally insulating main layer consisting of an expanded insulation with cell structure.

Prior art

In terms of energy saving, in the construction field, the need is increasingly felt to thermally insulate buildings in order to promote good heat diffusion in the rooms while avoiding the dispersion thereof to the outside. For this purpose, multi-layer insulating panels are widely employed in building constructions, for example to ensure the thermal insulation of walls, floors and roofs. Such insulating panels generally comprise a central insulating layer made, for example, of expanded polyurethane, polystyrene or mineral wool, interposed between two respective backing layers adapted to coat the insulating layer. Such backing layers serve two purposes: on the one hand, they limit the expansion of the expanded polyurethane, on the other, they give the panels themselves a preset shape and thickness while simultaneously ensuring dimensional stability of the panels.

Rigid expanded polyurethane has been quite successful for such applications lately because it achieves good thermal insulation employing less thick panels since it has an average thermal conductivity coefficient $\lambda$ [W m$^{-1}$ K$^{-1}$] which is lower than other commercial insulating materials. Accordingly, the insulating effects being equal, the building insulation panels employing expanded polyurethane have smaller volumes and weights than the insulating panels made with other insulators.

As is known, the reduced thermal conductivity of expanded polyurethane and similar expanded synthetic products (polystyrene, styrene) is due to the cell structure thereof: these are foams in which about 3%-5% by volume consists of the polymer and the remaining 970-950 of a gaseous phase of expanding agents encompassed in closed cells. The small amount of polymer and the gaseous phase limit the thermal conduction, while the small size of the closed cells limits the thermal convection between the gas and the inner surface of such cells.

The phenomenon most jeopardizing the performance of these cell structures is the partial diffusion of the gaseous phase towards the outside of the panel. Such a diffusion is to be minimized to the greatest extent possible in order to keep the insulating properties of the panel substantially the same over time. It is common practice to assess the insulating properties of the panel by measuring the oxygen transmission rate (OTR) and the water vapor transmission rate (WVTR) according to current standards.

Insulating panels for construction are known in which the phenomenon of the diffusion of the gaseous phase is limited by applying, to both faces of the panel, a coating which is impermeable to the diffusion of the gas, i.e., a gas-tight coating. It is common practice in the actual solutions on the market to associate both faces of the insulating panels containing polyurethanes (PUR) or polyisocyanurates (PIR) with a heterogeneous multi-layer gas-tight coating. Such a heterogeneous multi-layer coating typically consists of various layers of plastic material, in particular polyethylene (PE) or polypropylene (PP) or polyethylene terephthalate (PET), between which there is interposed a polymer component with gas-tight properties, in particular ethylene vinyl alcohol (EVOH) or polyvinyl alcohol (POVH).

In other known solutions, such heterogeneous multi-layer coatings are made employing a metal covering applied to the opposing faces of the panel, in particular a single layer or sheet of aluminum or coupled with plastic film, paper or other fibrous materials.

Known heterogeneous multi-layer coatings make it problematic to recycle the panel at the end of its life. Indeed, since such coatings are made with different materials and are not compatible with the recycling techniques used for the insulating layer itself, there is a need to carry out a step of mechanically separating the coating from the insulating to be separately transferred prior to performing the disposal and recycling operations.

Moreover, gas-tight coatings made of metal and/or plastic layers according to the common practice have a low surface roughness, making the outer surfaces of the insulating panel particularly smooth and slippery, which condition poses a potential hazard for the operators during the operations of laying the panels, in particular in the exposed areas of the building, such as the roof or walls or when there is humidity or ice, for example.

Moreover, the smooth surface of the coatings used makes difficult the adhesion of glues or mortars required for installing the insulating panels or for the external finishing.

Moreover, a further disadvantage of the panels with backing layers of aluminum is mainly associated with the cost required to manufacture the thick aluminum layers, which significantly affects the overall cost of the panel.

SUMMARY OF THE INVENTION

It is the main object of the present invention to devise and provide a backing layer for an insulating panel for building constructions, in particular a thermal-insulating panel which, although it substantially keeps unaltered the gas-tight properties of the panel over time, it facilitates recycling the insulating panel from the viewpoint of a circular economy, curbing the manufacturing and recycling costs of the panel itself and also allowing the surface roughness and insulating properties of the panel to be improved.

Such an object is achieved by a backing layer for an insulating panel for building constructions according to claim 1.

It is a particular object of the invention to provide a backing layer for a thermal-insulating panel having such features as to reconcile the need for:

-    flexibility and being rollable of the backing layer prior to the application thereof on the insulating panel,
-    mechanical resistance,
-    dimensional stability,
-    suitability for industrially manufacturing the insulating panel made of synthetic expanded/extruded material, in particular expanded polyurethane, which is manufactured so as to have good thermal insulation properties and maintain the properties of impermeability to gas diffusion over time.

The invention also relates to a method for manufacturing such a backing layer according to claim 11 and a multi-layer insulating panel according to claims 14-15.

Preferred embodiments of such a backing layer for panels and of the insulating panel are described in the dependent claims.

BRIEF DESCRIPTION OF THE DRAWINGS

Further features and advantages of the backing layer for an insulating panel and of the insulating panel according to the invention will become apparent from the following description of preferred embodiments, given by way of indicative, non-limiting examples, with reference to the accompanying drawings, in which:

-    **Figure 1** diagrammatically shows an exploded sectional view of a first embodiment of a multi-layer insulating panel for building constructions comprising two similar backing layers of the invention;
-    **Figure 2** diagrammatically shows an exploded sectional view of a second embodiment of a multi-layer insulating panel for building constructions comprising two similar backing layers of the invention;
-    **Figure 3** diagrammatically shows an exploded sectional view of a third embodiment of a multi-layer insulating panel for building constructions comprising a backing layer of the invention and a further gas-tight backing layer of the known type;
-    **Figure 4** diagrammatically shows an exploded sectional view of a fourth embodiment of a multi-layer insulating panel for building constructions comprising a backing layer of the invention and a further gas-tight backing layer of the known type.

Similar or equivalent elements in the aforesaid figures are indicated by the same reference numerals.

DETAILED DESCRIPTION OF PREFERRED EMBODIMENTS

With reference to the aforesaid drawings, backing layers of the gas-tight type which can be employed to coat multi-layer insulating panels 100, 100A, 100B, 100C for building constructions according to the invention are indicated by reference numerals 10, 10a and 10b.

Such insulating panels 100, 100A, 100B, 100C can be employed in the field of construction to cover walls (both vertical and horizontal), floors and roofs.

The term insulating panel is employed below to indicate thermal-insulating panels which can be employed in the field of construction.

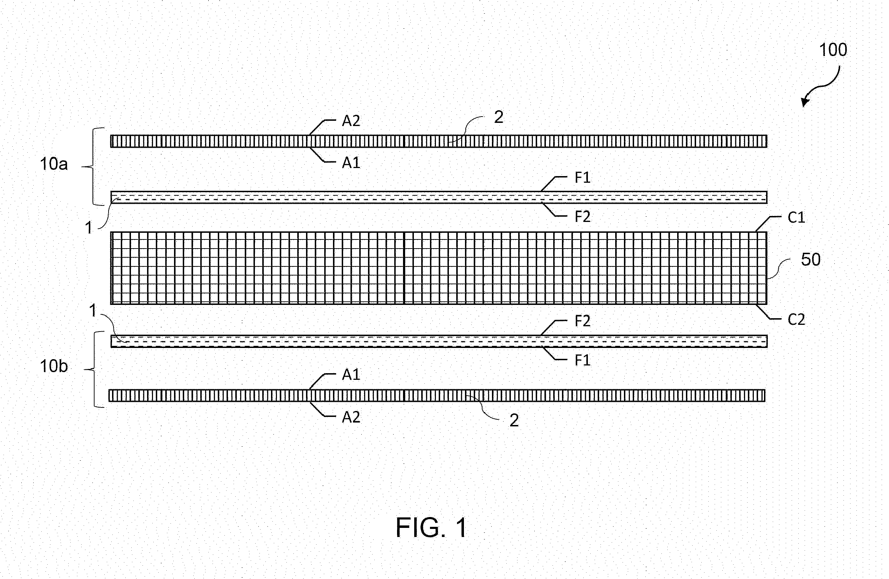

Each insulating panel 100, 100A, 100B, 100C in Figures 1-4 comprises a central body or main layer 50 made of insulating material, having a first body surface C1 and a second body surface C2 opposite each other (the larger surfaces are meant here, and not the outline surfaces showing the stratification of the panel).

Such a central body 50 of panel 100, 100A, 100B, 100C comprises an expanded insulation with cell structure, such as expanded polyurethane (PUR) or expanded polyisocyanurate (PIR), for example.

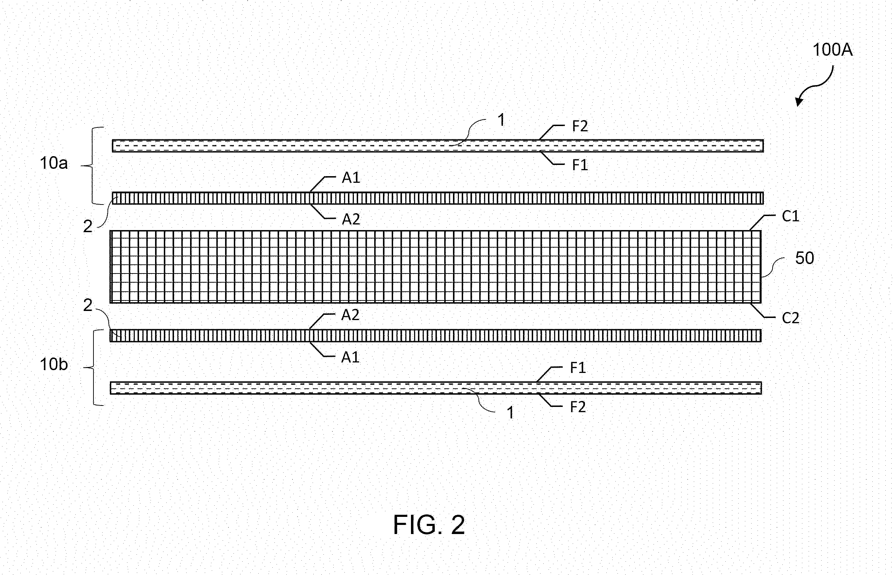

In the embodiments shown in Figures 1 and 2, such a central body 50 of panel 100, 100A is interposed or sandwiched between two similar backing layers 10a and 10b according to the invention.

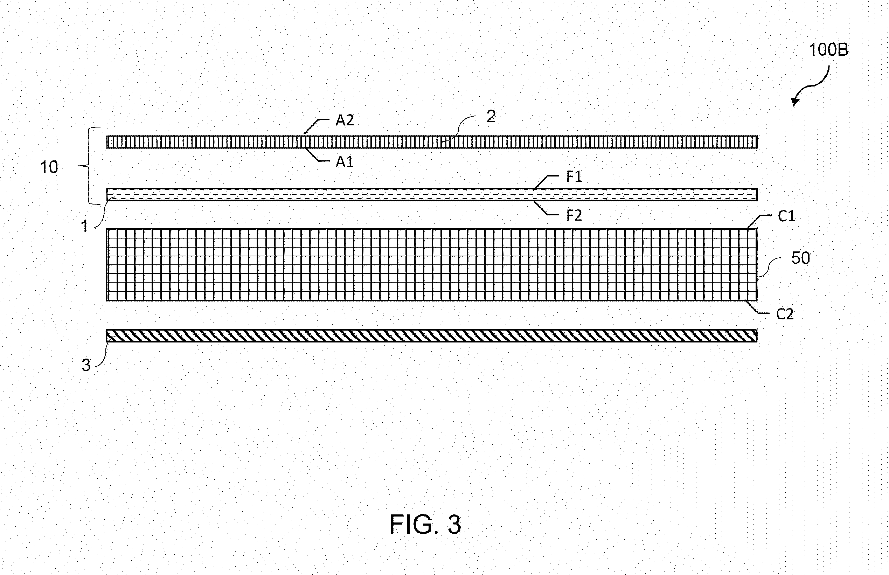

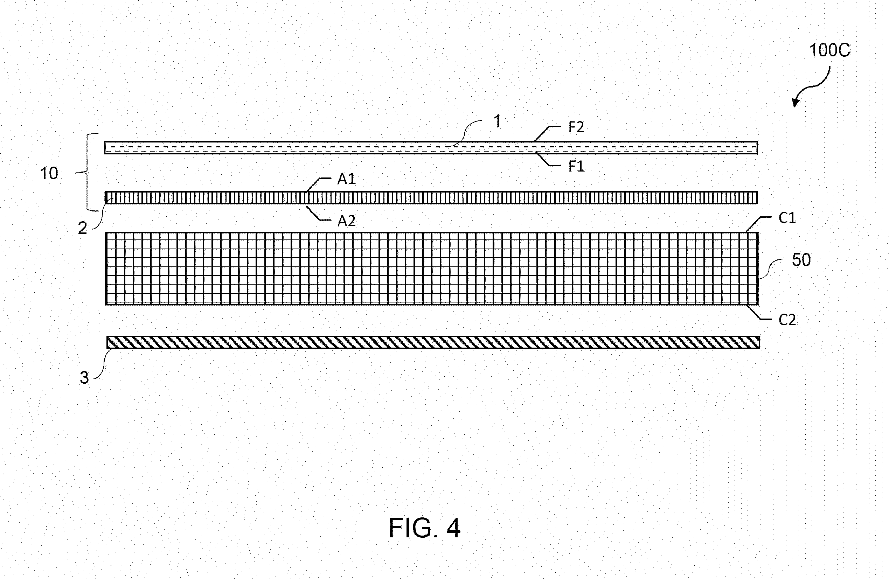

In an alternative embodiment shown in Figures 3 and 4, the central body 50 of panel 100B, 100C is interposed between a backing layer 10 of the invention and a further backing layer 3 of the known type, having gas-tight properties, which differs from the aforesaid backing layer 10, as better explained below.

Such backing layers 10, 10a, 10b are configured to limit the expansion of the polyurethane (or polyisocyanurate) foam during the steps of manufacturing the panels 100, 100A, 100B, 100C. Moreover, the backing layers 10, 10a, 10b are adapted to give the panels 100, 100A, 100B, 100C a preset shape and thickness while simultaneously ensuring the panels themselves have dimensional stability.

Each of the aforesaid backing layers 10, 10a, 10b consists of a plastic gas-barrier film 1, i.e., having gas-tight properties, and a reinforcing layer 2 made of fibrous material.

Such a plastic gas-barrier film 1 comprises a first film surface F1 and an opposing second film surface F2.

Moreover, the fibrous-material reinforcing layer 2 of each of the aforesaid backing layers 10, 10a, 10b comprises a first reinforcing surface A1 and an opposing second reinforcing surface A2.

In particular, such a plastic gas-barrier film 1 is configured to prevent the diffusion of the gaseous phase of the main layer 50, i.e., the diffusion of the gaseous phase of expanding agents encompassed in closed cells of such a layer, to the outside of panel 100, 100A, 100B, 100C.

According to an aspect of the present invention, such a fibrous reinforcing layer 2 is applied to the gas barrier film 1, in particular the first reinforcing surface A1 of the fibrous layer 2 is applied to the first film surface F1 of the gas barrier film 1 by means of a suitable adhesive, for example.

Thus, the backing layer 10, 10a, 10b of the invention consists of two layers only, i.e., such a backing layer does not have metal layers or metallized plastic layers.

The aforesaid plastic gas-barrier film 1 and the fibrous reinforcing layer 2 of the backing layer 10, 10a, 10b comprise the same polymer material. In particular, both the plastic gas-barrier film 1 and the fibrous reinforcing layer 2 comprise polyester.

In particular, such a polyester is polyethylene terephthalate (PET) or polybutylene terephthalate (PBT).

In an embodiment, the plastic gas-barrier film 1 and/or the fibrous reinforcing layer 2 of the backing layer 10, 10a, 10b consist of polyester.

In a further embodiment of the backing layer 10, 10a, 10b, alternative to the preceding embodiment, the plastic gas-barrier film 1 consists of polyester and the fibrous reinforcing layer 2 is made of a mixture comprising:

- from 80% to 100%, percentages by weight, of polyester;
- from 0% to 200, percentages by weight, of one or more other materials selected from: polypropylene, polyethylene, fiberglass.

In an embodiment of the present invention, the fibrous reinforcing layer 2 is made of a material selected from the group consisting of: non-woven fabric, fabric (weft warp), mesh/canvas.

In a particular embodiment of the present invention, at least one of the aforesaid gas barrier film 1 and fibrous reinforcing layer 2 of backing 10, 10a, 10b comprises at least one fire-retardant agent in addition to the aforesaid polyester.

Such a fire-retardant agent can be added to the polymer alone or in combination with further fire-retardant agents. Halogenated, halogen-free, hydroxide fire-retardants can be used, such as red phosphorus, organophosphates, for example.

For example, such a fire-retardant agent is ammonium polyphosphate (APP) or alumina trihydrate (ATH) or a combination thereof.

Thereby, the backing layer 10, 10a, 10b according to the invention falls under fire resistance classification E according to Standard EN 13501-11925/2.

In an embodiment of the backing layer 10, 10a, 10b of the invention, the plastic gas-barrier film 1 consists of polyester and the fibrous reinforcing layer (2) is made of a mixture comprising:

- from 80% to 100%, percentages by weight, of polyester;
- from 0% to 200, percentages by weight, of one or more other materials selected from: polypropylene, polyethylene, fiberglass, a fire-retardant agent.

It should be noted that in addition to polyester, the components of the mixture can be present singularly or in different combinations thereof. For example, the mixture can comprise: the fire-retardant additive and polyethylene or the fire-retardant additive and polypropylene or polypropylene and polyethylene or the fire-retardant additive, polyethylene and polyethylene.

In an embodiment of the backing layer 10, 10a, 10b of the invention, which is an alternative to the preceding one, the plastic gas-barrier film 1 is made of a mixture comprising:

- from 90% to 100%, percentages by weight, of polyester,
- from 0% to 10%, percentages by weight, of one or more other materials selected from: aluminum oxide or silicon oxide, a lacquer, a fire-retardant agent; and the fibrous reinforcing layer 2 is made of a mixture comprising:
- from 80% to 100%, percentages by weight, of polyester;
- from 0% to 200, percentages by weight, of one or more other materials selected from: polypropylene, polyethylene, fiberglass, a fire-retardant agent.

Indeed, several different techniques can be used to give plastic film gas-tight properties without significantly affecting the chemical composition of the material. One of these includes applying specific lacquers such as acrylic or polyvinylidene chloride, for example, to make coating layers of the polyester layer. The thickness of such coating layers is about 1 micron. An alternative technique includes spreading a layer of silicon oxide or aluminum oxide on the polyester layer. The thickness of such a coating layer is less than that which can be obtained with the lacquers since it is between 15-20 nanometers.

In an embodiment, the gas barrier film 1 is a continuous film without holes having a thickness between 20 um and 300 $\mu$m, in particular a thickness between 30 $\mu$m and 150 $\mu$m, more specifically between 30 um and 100 $\mu$m, even more specifically between 40 um and 70 um.

In an embodiment, the fibrous reinforcing layer 2 has a mass per unit area between 20 $g/m^2$ and 300 $g/m^2$, in particular between 40 $g/m^2$ and 200 $g/m^2$, preferably a mass per unit area between 50 $g/m^2$ and 150 $g/m^2$.

The backing layer 10, 10a, 10b for insulating panels as described in the different embodiments thereof has shown to have a series of advantageous characteristic properties, which are listed below.

As is known, the gas-tightness of a plastic film is commonly measured as the oxygen transmission rate (OTR). The more the film is gas-tight, the less oxygen is transmitted therethrough during a time interval.

The OTR parameter and related measuring methods are defined in Standards ASTM-D3985 or ASTM-F1927, for example. According to such standards, the OTR parameter of a plastic film can be calculated by taking measurements on the plastic film during a test and applying the equation:

$$OTR = \Delta V * d * A * t * \Delta p$$

where $\Delta V$ is the volume of diffused oxygen, d is the thickness of the film, A the area of the film, t the time, and $\Delta p$ the difference between the partial oxygen pressures on different sides of the film.

The aforesaid measurements are typically carried out at the temperature of 23°C.

From such measurements taken during a test to which backing 10, 10a, 10b of the invention was subjected, the Applicant has calculated that the oxygen transmission rate (OTR) of the backing, as described by Standard ASTM 3985, at the temperature of 23°C, at the pressure of 1 atm, and with relative humidity of 50%, is less than or equal to 4.5 ml/m²/day.

In addition to being gas-tight, the coating 10, 10a, 10b of the invention also serves as a barrier to the diffusion of water vapor. Indeed, by preventing the water vapor from being diffused, from the outside of the building, for example, the material forming the insulating layer 50 is not deteriorated by the moisture.

As is known, the transmission speed of water vapor through a plastic-material film can be calculated based on the amount of water diffused through the film in a time interval.

Such an amount is directly proportional to the area of the film, to the difference in partial pressure of the vapor on the different sides of the film, and the time, while it is inversely proportional to the thickness of the film.

Thus, the parameter describing the diffusivity of the water vapor through the film (water vapor transmission rate, WVTR) can be calculated as:

$$WVTR = \Delta m * d * A * t * \Delta p,$$

where $\Delta m$ is the mass of diffused water, d the thickness of the film, A the area of the film, t the time, and $\Delta p$ the difference in partial pressure of the water vapor on the different sides of the film.

Generally, the environment on one side of the film is dry, or substantially dry, whereby the relative humidity on one side can be less than 5% or also equal to 0%, while the relative humidity on the other side is high, also greater than 90%, for example.

According to Standards EN-ISO 12572 and EN 1931, the Applicant has verified that the water vapor transmission rate (WVTR) of backing 10, 10a, 10b for panels of the invention is less than 2 g/m²/day at the temperature of 23°C according to Standard EN1931.

The present invention also relates to a multi-layer insulating panel 100, 100A, 100B, 100C for building constructions, in particular a thermal-insulating panel.

Such a multi-layer insulating panel 100, 100A, 100B, 100C, or simply panel, comprises a central body 50 comprising an expanded insulation with cell structure consisting of expanded polyurethane (PUR) or expanded polyisocyanurate (PIR).

Such a central body 50 comprises a first body surface C1 and a second body surface C2.

The aforesaid panel comprises at least one backing layer 10, 10a, 10b according to the invention described above.

Such an at least one backing layer 10, 10a, 10b is applied or connected to the central body 50, along at least one of such first C1 and second C2 body surfaces, through the second film surface F2 of the gas barrier film 1 or through the second reinforcing surface A2 of the fibrous reinforcing surface 2. In the first case, the plastic gas-barrier film 1 faces the central body 50 of the panel. In the second case, the fibrous reinforcing layer 2 faces the central body 50 of the panel.

In the embodiments depicted in Figures 1 and 2, the insulating panel 100, 100A comprises a first 10a and a second 10b backing layer similar to each other and applied to the aforesaid first C1 and second C2 body surfaces, respectively. In other words, the central body 50 of the multi-layer insulating panel 100, 100A is interposed or sandwiched between two similar backing layers 10a and 10b according to the invention.

In a first embodiment, depicted in Figure 1, the second film surface F2 of the gas barrier film 1 of the first backing layer 10a is configured to be applied and adhere to the first body surface C1 of the central body 50 of panel 100. The second film surface F2 of the gas barrier film 1 of the second backing layer 10b is configured to be applied and adhere to the second body surface C2 of the central body 50 of panel 100. Thereby, the plastic gas-barrier film 1 of the first 10a and second 10b backing layers faces the central body 50 of the panel.

In a second embodiment, depicted in Figure 2, the second reinforcing surface A2 of the fibrous reinforcing layer 2 of the first backing layer 10a is configured to be applied and adhere to the first body surface C1 of the central body 50 of panel 100A. The second reinforcing surface A2 of the fibrous reinforcing layer 2 of the second backing layer 10b is configured to be applied and adhere to the second body surface C2 of the central body 50 of panel 100A. Thereby, the fibrous reinforcing layer 2 of the first 10a and second 10b backing layers faces the central body 50 of the panel.

In a further embodiment (not shown in the drawings), the insulating panel comprises a first 10a and a second 10b backing layers similar to each other and connected to said first C1 and second C2 body surfaces of the central body 50, respectively. The plastic gas-barrier film 1 of the first backing layer 10a and the fibrous reinforcing layer 2 of the second backing layer 10b face the central body 50 of the panel.

In the embodiments shown in Figures 3 and 4, the central body 50 of the multi-layer insulating panel 100B, 100C is interposed between a backing layer 10 of the invention and a further backing layer 3, having gas-tight properties, which differs from the aforesaid backing layer 10.

In particular, in a third embodiment shown in Figure 3, the second film surface F2 of the gas barrier film 1 of the backing layer 10 is configured to be applied and adhere to the first body surface C1 of the central body 50 of panel 100B. The aforesaid further backing layer 3 is configured to be applied and adhere to the second body surface C2 of the central body 50 of panel 100B.

In a fourth embodiment shown in Figure 4, the second reinforcing surface A2 of the fibrous reinforcing layer 2 of the backing layer 10 is configured to be applied and adhere to the first body surface C1 of the central body 50 of panel 100C. The aforesaid further backing layer 3 is configured to be applied and adhere to the second body surface C2 of the central body 50 of panel 100B.

It should be noted that surface C1 and surface C2 of the central body 50 of panel 100, 100A, 100B, 100C arbitrarily can be both the surface facing the inside of the building or the surface facing the outside. Thus, the multi-layer insulating panel 100, 100A, 100B, 100C faces the backing layer 10, 10a applied to the first surface C1 towards the outside, or the backing layer 10b or the further backing layer 3 applied to the second surface C2, as shown in the panels in Figures 1-4.
In other words, the various embodiments shown in Figures 1-4 are not to be intended as indicative of a laying direction of the panel.
As shown above, based on the method in which the backing layers 10, 10a, 10b are made to adhere to the surfaces C1 and C2 of the central body 50 of the panel, the panels of the invention are configured to face the gas barrier film 1 or the fibrous reinforcing layer 2 or the further backing layer 3 towards the outside of the building, and simultaneously the panels of the invention can face the gas barrier film 1 or the fibrous reinforcing layer 2 or the further backing layer 3 towards the inside of the building.

In an embodiment, the further backing layer 3 is made with a conventional gas-tight material, such as, for example, aluminum, multi-layer film comprising paper, aluminum and plastic-material film in different combinations thereof, or with other metal materials.

In a further embodiment, such a further backing layer 3 is a metal layer or a plastic layer or a laminated metal-plastic multi-layer.

In a further embodiment, the further backing layer 3 is made of aluminum.

The present invention also relates to a method for manufacturing the backing layer 10, 10a, 10b of the multi-layer insulating panel 100, 100A, 100B, 100C according to the invention.

The method of making the backing layer 10, 10a, 10b comprises a first step of manufacturing the fibrous reinforcing layer 2 and a second step of manufacturing the plastic gas-barrier film 1. According to the invention, the plastic gas-barrier film 1 and the fibrous reinforcing layer 2 comprise the same polymer material, in particular polyester.

In other words, in order to manufacture the backing layer 10, 10a, 10b, the gas barrier film 1 and the fibrous reinforcing layer 2 can be manufactured irrespective of each other in the initial steps of the method for manufacturing the backing.

The method then comprises a third step of joining the gas barrier film 1 and the fibrous reinforcing layer 2 by gluing such a first film surface F1 of the gas barrier film 1 on the first reinforcing surface A1 of the fibrous reinforcing layer 2.

In an embodiment, the gluing of the gas barrier film 1 and the fibrous reinforcing layer 2 occurs by means of a gluing technique selected from the group consisting of: ultrasonic bonding, gluing by heating, gluing by ultraviolet radiation and gluing with adhesives. Preferably, but not by way of limitation, the adhesives which can be used to optimize the homogeneity of the material and the compatibility with the recirculation of the polyurethane are polyurethane or polyolefin adhesives.

In an alternative embodiment of the method for manufacturing the backing layer 10, 10a, 10b, the following steps are included:

- manufacturing the fibrous reinforcing layer 2 comprising a first reinforcing surface A1 and an opposing second reinforcing surface A2;
- extruding and adhering a mixture comprising a polymer material, in particular polyester, to the first reinforcing surface A1 of the fibrous reinforcing layer 2 for forming a plastic gas-barrier film 1 applied to the fibrous reinforcing layer 2. In particular, the fibrous reinforcing layer 2 comprises the same polymer material as the extruded mixture, i.e., polyester.

In order to manufacture the insulating panel 100, in a first embodiment, the process of expanding the material forming the central body 50 occurs directly between the two backing layers 10a and 10b or between one backing layer 10 of the invention and the further gas-tight backing layer 3 of the known type.

In the specific case in which said central body 50 consists of polyurethane, a step of spraying the polyurethane foam between the two backing layers 10a and 10b or between the backing layer 10 and the further backing layer 3 is included.

Such backing layers 10, 10a, 10b and the further backing layer 3 are adapted to limit the expansion of the polyurethane foam forming the central insulating body 50.

In a second embodiment of panel 100, the backing layers 10, 10a, 10b and the further backing layer 3 according to the embodiments shown are glued onto the opposing surfaces of the preformed central insulating body 50.

Alternatively, the backing layer 10, 10a, 10b can be extended, similarly to a sheet, above the central insulating body 50 during the laying of the insulation itself, for example, on a roof, to form an additional moisture-tight layer for such a central insulating body 50. In particular, the backing layer can also be extended over other synthetic insulators (polystyrene, phenolic foam) or insulators of fibrous, natural or mineral type.

The backing layers 10, 10a, 10b of insulating panels 100 of the invention have several advantages in addition to those indicated above.

As is known, rigid expanded polyurethane is a thermosetting network polymer produced by the reaction of two main components - polyols and polyisocyanates - and in the presence of an expanding agent (generally hydrocarbons, $CO_2$ or other mixtures) and other additives.

The polyol family is quite large but essentially comprises polyether polyols and polyester polyols.

In particular, with regard to recycling rigid polyurethane panels, the fact of making a backing layer 10, 10a, 10b according to the invention as a single-material coating, thus not having heterogeneous elements, of the plastic type, i.e., without metal and in particular mostly consisting of polyester, which is a material similar to polyurethane (PU) forming the central body 50 of the multilayer insulating panel 100, 100A, 100B, 100C, allows the coating not to require mechanical separation from the insulating foam and to be recycled together with the main body of the panel in both chemical and physical recycling processes.

In particular, in relation to the panels comprising the backings of the invention, the main polyurethane recycling technologies can be used, such as chemical recycling (glycolysis) or physical recycling (reutilization in powders and crushing).

Moreover, the backing layers 10, 10a, 10b according to the invention do not involve employing EVOH or PVA, thus avoiding the negative impact on the recycling processes in compliance with the relevant European directives.

Moreover, the backing layers 10, 10a, 10b are resistant to water and have an increased resistance to pedestrian traffic and abrasion.

In addition, the fibrous reinforcing layer 2 greatly increases the surface roughness of the backing layer 10, 10a, 10b as compared to the smooth sublayers typically employed, thus reducing possible accidents when the panels are laid, in particular when the backing layer 10, 10a, 10b is applied to the central body 50 of the multilayer panel 100, 100c with the fibrous reinforcing layer 2 facing the outside.

Finally, glues, skim coats, resins and mortars which would not adhere to the smooth sub-layers such as aluminum sheets or plastic film, can also be applied to the fibrous reinforcing layer 2.

To further improve the adhesion to the insulating foam of the central body of the panel, treatments such as the corona treatment can be used, and chemical additives which increase the polarity of the polymer material, such as lacquering and treatments with silicates can be used.

In order to meet contingent needs, those skilled in the art may make changes and adaptations to the embodiments of a backing layer and to the multi-layer insulating panel for building constructions described above or can replace elements with others which are functionally equivalent without departing from the scope of the following claims. Each of the features described above as belonging to a possible embodiment can be implemented irrespective of the other embodiments described.

**Claims**

1. A backing layer (10, 10a, 10b) for a multi-layer insulating panel (100; 100A; 100B; 100C) for building constructions, said backing layer consisting of:

   - a plastic gas-barrier film (1) comprising a first film surface (F1) and an opposing second film surface (F2) ;
   - a reinforcing layer (2) made of fibrous material comprising a first reinforcing surface (A1) and an opposing second reinforcing surface (A2); said fibrous reinforcing layer (2) being applied to said first film surface (F1) of the plastic gasbarrier film (1) by means of said first reinforcing surface (A1),
   **characterized in that**
   said plastic gas-barrier film (1) and said fibrous reinforcing layer (2) comprise polyester.

2. A backing layer (10, 10a, 10b) for a multi-layer insulating panel (100; 100A; 100B; 100C) according to claim 1, wherein:

   - said plastic gas-barrier film (1) consists of polyester;
   - said fibrous reinforcing layer (2) is made of a mixture comprising:

     - from 80% to 100%, percentages by weight, of polyester;
     - from 0% to 200, percentages by weight, of one or more other materials selected from: polypropylene, polyethylene, fiberglass.

3. A backing layer (10, 10a, 10b) for a multi-layer insulating panel (100; 100A; 100B; 100C) according to claim 1, wherein at least one of said plastic gas-barrier film (1) and said fibrous reinforcing layer (2) comprises at least one fire-retardant agent in addition to said polyester.

4. A backing layer (10, 10a, 10b) for a multi-layer insulating panel (100; 100A; 100B; 100C) according to the preceding claim, wherein said at least one fire-retardant agent is ammonium polyphosphate (APP) or alumina trihydrate (ATH) or a combination thereof.

5. A backing layer (10, 10a, 10b) for a multi-layer insulating panel (100; 100A; 100B; 100C) according to any one of claims 3-4, wherein:

   - said plastic gas-barrier film (1) consists of polyester;
   - said fibrous reinforcing layer (2) is made of a mixture comprising:

      - from 80% to 100%, percentages by weight, of polyester;
      - from 0% to 200, percentages by weight, of one or more other materials selected from: polypropylene, polyethylene, fiberglass, a fire-retardant agent.

6. A backing layer (10, 10a, 10b) for a multi-layer insulating panel (100; 100A; 100B; 100C) according to any one of claims 3-4, wherein:

   - said plastic gas-barrier film (1) is made of a mixture comprising:

      - from 90% to 100%, percentages by weight, of polyester,
      - from 0% to 10%, percentages by weight, of one or more other materials selected from: aluminum oxide or silicon oxide, a lacquer, a fire-retardant agent;

   - said fibrous reinforcing layer (2) is made of a mixture comprising:

      - from 80% to 100%, percentages by weight, of polyester;
      - from 0% to 200, percentages by weight, of one or more other materials selected from: polypropylene, polyethylene, fiberglass, a fire-retardant agent.

7. A backing layer (10, 10a, 10b) for a multi-layer insulating panel (100; 100A; 100B; 100C) according to any one of the preceding claims, wherein said polyester is polyethylene terephthalate (PET) or polybutylene terephthalate (PBT).

8. A backing layer (10, 10a, 10b) for a multi-layer insulating panel (100; 100A; 100B; 100C) according to any one of the preceding claims, wherein the fibrous material of the reinforcing layer (2) is selected from the group consisting of: non-woven fabric, fabric (weft-warp), mesh.

9. A backing layer (10, 10a, 10b) for a multi-layer insulating panel (100; 100A; 100B; 100C) according to any one of claims 1-8, wherein said plastic gas-barrier film (1) is a continuous film without holes having a thickness between 20 um and 300 $\mu$m, in particular a thickness between 30 $\mu$m and 150 $\mu$m, more specifically between 30 um and 100 $\mu$m, even more specifically between 40 um and 70 $\mu$m.

10. A backing layer (10, 10a, 10b) for a multi-layer insulating panel (100; 100A; 100B; 100C) according to any one of claims 1-8, wherein said fibrous reinforcing layer (2) has a mass per unit area between 20 g/m$^2$ and 300 g/m$^2$, in particular between 40 g/m$^2$ and 200 g/m$^2$, preferably a mass per unit area between 50 g/m$^2$ and 150 g/m$^2$.

11. A method for manufacturing a backing layer (10, 10a, 10b) for a multi-layer insulating panel (100, 100A, 100B, 100C), comprising the steps of:

   - manufacturing a fibrous reinforcing layer (2) comprising a first reinforcing surface (A1) and an opposing second reinforcing surface (A2);
   - manufacturing a plastic gas-barrier film (1) comprising a first film surface (F1) and an opposing second film surface (F2), said plastic gas-barrier film (1) and said fibrous reinforcing layer (2) comprising polyester;
   - joining said plastic gas-barrier film (1) and said fibrous reinforcing layer (2) by gluing the first film surface (F1) of said plastic gas-barrier film (1) to the first reinforcing surface (A1) of said fibrous reinforcing layer (2).

12. A method for manufacturing a backing layer (10, 10a, 10b) according to claim 11, wherein said step of gluing the plastic gas-barrier film (1) to the fibrous reinforcing layer (2) is carried out by means of a gluing technique selected from the group consisting of: ultrasonic bonding, gluing by heating, gluing by ultraviolet radiation, gluing with adhesives.

13. A method for manufacturing a backing layer (10, 10a, 10b) for a multi-layer insulating panel (100, 100A, 100B, 100C), comprising the steps of:

- manufacturing a fibrous reinforcing layer (2) comprising a first reinforcing surface (A1) and an opposing second reinforcing surface (A2);
- extruding and adhering a mixture comprising polyester to said first reinforcing surface (A1) of said fibrous reinforcing layer (2), for forming a plastic gas-barrier film (1) applied to said fibrous reinforcing layer (2), said fibrous reinforcing layer (2) comprising polyester.

14. A multi-layer insulating panel (100; 100B) for building constructions, comprising:

- a central body (50) comprising an expanded insulation with cell structure selected from the group consisting of: expanded polyurethane (PUR), expanded polyisocyanurate (PIR), said central body (50) comprising a first body surface (C1) and a second body surface (C2);
- at least one backing layer (10, 10a, 10b) according to any one of claims 1 to 10,

wherein said at least one backing layer (10, 10a, 10b) is connected to the central body (50) along at least one of said first (C1) and second (C2) body surfaces through said second film surface (F2) of the plastic gas-barrier film (1), said plastic gas-barrier film (1) facing the central body (50).

15. A multi-layer insulating panel (100A; 100C) for building constructions, comprising:

- a central body (50) comprising an expanded insulation with cell structure selected from the group consisting of: expanded polyurethane (PUR), expanded polyisocyanurate (PIR), said central body (50) comprising a first body surface (C1) and a second body surface (C2);
- at least one backing layer (10, 10a, 10b) according to any one of claims 1 to 10,

wherein said at least one backing layer (10, 10a, 10b) is connected to the central body (50) along at least one of said first (C1) and second (C2) body surfaces through said second reinforcing surface (A2) of the fibrous reinforcing layer (2), said fibrous reinforcing layer (2) facing the central body (50).

16. A multi-layer insulating panel (100A) according to claim 15, wherein said insulating panel (100A) comprises a first (10a) and a second (10b) backing layer, similar to each other and connected to said first (C1) and second (C2) body surfaces of the central body (50), respectively, wherein said fibrous reinforcing layer (2) of the first (10a) and second (10b) backing layers faces the central body (50).

17. A multi-layer insulating panel (100) according to claim 14, wherein said insulating panel (100) comprises a first (10a) and a second (10b) backing layer, similar to each other and connected to said first (C1) and second (C2) body surfaces of the central body (50), respectively, wherein said plastic gas-barrier film (1) of the first (10a) and second (10b) backing layers faces the central body (50).

18. A multi-layer insulating panel according to claims 14-15, wherein said insulating panel comprises a first (10a) and a second (10b) backing layer, which are similar to each other and connected to said first (C1) and second (C2) body surfaces of the central body (50), respectively, wherein the plastic gas-barrier film (1) of the first backing layer (10a) and the fibrous reinforcing layer (2) of the second backing layer (10b) face the central body (50).

FIG. 1

EP 4 230 408 A1

FIG. 2

EP 4 230 408 A1

EP 4 230 408 A1

FIG. 3

FIG. 4

Europäisches
Patentamt

European
Patent Office

Office européen
des brevets

# EUROPEAN SEARCH REPORT

**Application Number**

EP 23 15 6597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/069116 A1 (KINGSPAN HOLDINGS IRL LTD [IE]) 19 April 2018 (2018-04-19) | 1-3,5-9, 15,16 | INV. B32B27/12 |
| Y | * claims 1, 12 * * figure 1 * * paragraphs [0001], [0002], [0027], [0033], [0067] – [0069], [0083], [0119] * | 14,17,18 | B32B5/02 B32B5/18 B32B7/027 B32B7/12 B32B27/06 B32B27/18 B32B27/36 |
| | ----- | | |
| X | GB 2 577 648 A (KINGSPAN HOLDINGS IRL LTD [IE]) 1 April 2020 (2020-04-01) | 1-3,5-9, 15,16 | |
| Y | * claims 1, 12 * * figure 1 * * paragraphs [0001], [0002], [0028], [0033], [0067] – [0069], [0083], [0119] * | 14,17,18 | |
| | ----- | | |
| X | EP 0 940 249 A2 (CELOTEX CORP [US]) 8 September 1999 (1999-09-08) | 1-3,5-7, 9,11,12, 15,16 | |
| Y | * claims 1, 3, 5, 6, 14, 16, 18 * * figure 2 * * paragraphs [0008] – [0025] * | 14,17,18 | |
| | ----- | | |
| X | EP 2 701 907 B1 (SILCART S P A [IT]) 23 May 2018 (2018-05-23) | 1,2,8, 11-13,15 | |
| Y | * claims 1, 6, 7, 10, 13-16 * * paragraphs [0016], [0018], [0029], [0030], [0038], [0047], [0054] * | 14,17,18 | |
| | ----- | | |
| X | US 2014/076220 A1 (ROMBOLOTTO OSCAR RICCARDO [DE]) 20 March 2014 (2014-03-20) | 1-3,5,6, 8,10 | |
| Y | * claims 1, 10 * * figure 2 * * paragraph [0051] * * table 1 * | 14,17,18 | |
| | ----- | | |
| | -/-- | | |

**TECHNICAL FIELDS SEARCHED (IPC)**

B32B

The present search report has been drawn up for all claims

| Place of search | Date of completion of the search | Examiner |
|---|---|---|
| The Hague | 7 June 2023 | Nowak, René |

EPO FORM 1503 03.82 (P04C01)

page 1 of 2

Europäisches
Patentamt

European
Patent Office

Office européen
des brevets

# EUROPEAN SEARCH REPORT

Application Number

EP 23 15 6597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | **EP 3 106 580 A1 (WALKI GROUP OY [FI])** **21 December 2016 (2016-12-21)** | **1-8,** **10-13** | |
| Y | **\* claims 1, 8-14 \*** **\* figure 2b \*** **\* paragraphs [0001], [0054], [0057] \*** ----- | **14,17,18** | |

TECHNICAL FIELDS
SEARCHED      (IPC)

The present search report has been drawn up for all claims

| Place of search | Date of completion of the search | Examiner |
|---|---|---|
| **The Hague** | **7 June 2023** | **Nowak, René** |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 6597

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2023

| Patent document cited in search report | | Publication date | Patent family member(s) | | Publication date |
|---|---|---|---|---|---|
| WO 2018069116 | A1 | 19-04-2018 | AU | 2017341275 A1 | 02-05-2019 |
| | | | CA | 3040635 A1 | 19-04-2018 |
| | | | CN | 110099789 A | 06-08-2019 |
| | | | DK | 3526032 T3 | 24-10-2022 |
| | | | EP | 3526032 A1 | 21-08-2019 |
| | | | GB | 2555099 A | 25-04-2018 |
| | | | JP | 7109432 B2 | 29-07-2022 |
| | | | JP | 2019533785 A | 21-11-2019 |
| | | | KR | 20190073427 A | 26-06-2019 |
| | | | SG | 11201902976U A | 30-05-2019 |
| | | | US | 2019234068 A1 | 01-08-2019 |
| | | | WO | 2018069116 A1 | 19-04-2018 |
| GB 2577648 | A | 01-04-2020 | NONE | | |
| EP 0940249 | A2 | 08-09-1999 | AT | 413271 T | 15-11-2008 |
| | | | CA | 2260671 A1 | 06-09-1999 |
| | | | DK | 0940249 T3 | 12-01-2009 |
| | | | EP | 0940249 A2 | 08-09-1999 |
| | | | ES | 2317685 T3 | 16-04-2009 |
| | | | JP | H11314297 A | 16-11-1999 |
| | | | US | 6093481 A | 25-07-2000 |
| EP 2701907 | B1 | 23-05-2018 | EP | 2701907 A2 | 05-03-2014 |
| | | | ES | 2684523 T3 | 03-10-2018 |
| | | | RU | 2013152325 A | 10-06-2015 |
| | | | WO | 2012147040 A2 | 01-11-2012 |
| | | | ZA | 201307958 B | 28-01-2015 |
| US 2014076220 | A1 | 20-03-2014 | CA | 2846478 A1 | 08-11-2012 |
| | | | DE | 102011075374 A1 | 08-11-2012 |
| | | | EP | 2705198 A1 | 12-03-2014 |
| | | | US | 2014076220 A1 | 20-03-2014 |
| | | | WO | 2012150357 A1 | 08-11-2012 |
| EP 3106580 | A1 | 21-12-2016 | EP | 3106580 A1 | 21-12-2016 |
| | | | PL | 3106580 T3 | 02-11-2020 |

EPO FORM P0459

For more details about this annex : see Official Journal of the European Patent Office, No. 12/82